Europäisches Patentamt

European Patent Office

Office européen des brevets

(19)

(11) Veröffentlichungsnummer: **0 054 792**
A2

(12) **EUROPÄISCHE PATENTANMELDUNG**

(21) Anmeldenummer: 81110151.8

(22) Anmeldetag: 04.12.81

(51) Int. Cl.³: **F 01 P 3/00**, F 02 B 29/04

(30) Priorität: **18.12.80 DE 3047672**

(43) Veröffentlichungstag der Anmeldung: **30.06.82**
**Patentblatt 82/26**

(84) Benannte Vertragsstaaten: **CH DE FR IT LI**

(71) Anmelder: **Süddeutsche Kühlerfabrik Julius Fr. Behr GmbH & Co. KG., Mauserstrasse 3, D-7000 Stuttgart 30 (DE)**
Anmelder: **Aktiengesellschaft Adolph Saurer, CH-9320 Arbon (CH)**

(72) Erfinder: **Engler, Gustav, Ing. grad., Sprengerstrasse 19, D-7140 Remseck 5 (DE)**
Erfinder: **Rüesch, Peter, Ing. HTL, Käsererstrasse 6, CH-9400 Rohrschacher Berg (CH)**

(74) Vertreter: **Heumann, Christian, Süddeutsche Kühlerfabrik Julius Fr. Behr GmbH & Co. KG Patentabteilung Mauserstrasse 3 Postfach 30 09 20, D-7000 Stuttgart 30 (DE)**

(54) **Kühleinrichtung zur Kühlung einer Brennkraftmaschine und der Ladeluft.**

(57) Die Erfindung betrifft einen gemeinsamen Kühlkreislauf für die Brennkraftmaschine und die Ladeluft, wobei die Kühlung der Brennkraftmaschine auf höherem Temperaturniveau über einen Hauptkühler (2) und die Kühlung der Ladeluft auf einem niedrigeren Temperaturniveau über einen Nebenkühler (4) erfolgt. Die gesamte aus der Brennkraftmaschine (1) austretende Kühlmittelmenge wird zunächst über den Hauptkühler (2) geleitet und danach in zwei Teilströme (16, 17) aufgeteilt, von denen der eine Teilstrom (16) über den Nebenkühler (4) und den Ladeluftkühler (5) geführt und mit dem anderen Teilstrom (17) vor Eintritt in die Brennkraftmaschine (1) wieder vereinigt ist. Somit läuft die gesamte Kühlmittelmenge über Hauptkühler (2) und Brennkraftmaschine (1), während nur ein Teilstrom (16) über den Nebenkühler (4) strömt.

Süddeutsche Kühlerfabrik Julius Fr. Behr GmbH & Co. KG
Mauserstr. 3, D - 7000 Stuttgart 30

und

Aktiengesellschaft Adolf Saurer, CH-9320    A r b o n

## Kühleinrichtung zur Kühlung einer Brennkraftmaschine und der Ladeluft

Die Erfindung geht aus von einer durch die DE-OS 27 04 778 bekannt gewordenen Kühleinrichtung gemäß dem Oberbegriff des Anspruches 1.

Bei der Kühlung von aufgeladenen Brennkraftmaschinen ist es erwünscht und zweckmäßig, die Motor- bzw. Verbrennungstemperatur auf einem höheren Niveau als die der Ladeluft bzw. anderer Medien, zum Beispiel des Motor-, Getriebe- oder Hydrauliköles, zu halten. Diese Aufgabe kann durch zwei getrennte Kühlkreise für die Motorkühlung einerseits und die Ladeluftkühlung andererseits gelöst werden, wie dies zum

0054792
1.12.1981
80-B-21
EZDP/Ri/hü

Beispiel in der DE-AS 15 76 718 vorgeschlagen wurde. Nachteilig bei dieser Lösung ist jedoch, daß sie von der Kostruktion und vom Raumbedarf, aber auch von der Regeltechnik her, sehr aufwendig ist. Andererseits kann das erwähnte Kühlproblem auch durch einen gemeinsamen Kühlkreislauf gelöst werden, wie dies durch die DE-AS 12 23 196 bekannt wurde. Dort ist ein Hauptkreis mit Hauptkühler für die Motorkühlung und ein Nebenkreis mit Nebenkühler für die Ladeluftkühlung vorgesehen, wobei der Nebenkreis dem Hauptkreis auf der Strömungsstrecke zwischen Motorvorlauf und Motorrücklauf, also zum Motor, parallel geschaltet ist. Dies hat den Nachteil, daß nicht die gesamte Kühlmittelmenge für die Kühlung des Motors zur Verfügung steht und damit eine höhere Temperaturdifferenz zwischen Motorein- und -auslaß erforderlich ist. Durch die DE-OS 27 04 778 wurde dieser Nachteil zwar vermieden, weil die gesamte Kühlmittelmenge, bestehend aus zwei parallel zueinander geschalteten Teilströmen für die Motor- und die Ladeluftkühlung, den Motor durchströmt. Jedoch ergibt sich durch die Parallelschaltung der beiden Kühler für den Motor und den Ladeluft-Kühlkreis der Nachteil, daß diese Kühler wiederum nur von Teilmengen der gesamten umlaufenden Kühlmittelmenge durchströmt werden. Dies bedingt infolge des schlechteren Austauschgrades zwischen Kühlmittel und Luft größere Kühlerflächen.

Aufgabe der Erfindung ist es daher, die erwähnten Nachteile der bekannten Konstruktionen zu vermeiden, dagegen ihre Vorteile beizubehalten und eine Kühleinrichtung der eingangs genannten Art zu schaffen, die bei gleichwertiger Kühlleistung einen geringeren baulichen Aufwand und Raum-

1.12.1981 00 54792
80-B-21
EZDP/Heu/hu

bedarf benötigt. Gelöst wird diese Aufgabe durch die Merkmale der nachstehenden Ansprüche 1-13.

Gemäß Anspruch 1 wird die gesamte Kühlmittelmenge über einen als Hauptkühler ausgebildeten Kühler geleitet und . danach in zwei Teilströme aufgeteilt, von denen der eine über einen als Nebenkühler ausgebildeten Kühler und einen Ladeluftkühler geleitet und dann mit dem anderen Teilstrom vor Eintritt in die Brennkraftmaschine wieder vereinigt wird. Hieraus ergibt sich der Vorteil, daß der Hauptkühler gegenüber einem teilbeaufschlagten Kühler einen besseren Austauschgrad erhält und daß somit die gleiche Kühlleistung mit einer kleineren Kühlerstirnfläche erzielt werden kann.

Nach einer vorteilhaften Weiterbildung der Erfindung ist gemäß Anspruch 2 hinter der Vereinigung der beiden Teilströme eine Pumpe im Kühlmittelkreislauf angeordnet, die die gesamte umlaufende Kühlmittelmenge zum Kühlmitteleintritt in der Brennkraftmaschine fördert. Vorteilhaft hierbei ist, daß nur eine Pumpe zur Förderung notwendig ist.

In weiterer Ausgestaltung der Erfindung sind gemäß Anspruch 3 zwischen Pumpe und Kühlmitteleintritt ein Getriebeölkühler und/oder ein Motorölkühler vorgesehen. Vorteilhaft bei dieser Anordnung ist, daß sich infolge der Beaufschlagung beider Kühler mit der gesamten Kühlmittelmenge eine relativ gute Kühlleistung ergibt.

Eine vorteilhafte Alternative gemäß Anspruch 4 sieht vor,

0054792
1.12.1981
80-B-21
EZDP/Heu/hu

daß der Ladeluftkühler, der Getriebeölkühler und der Motorölkühler im Nebenkreis hinter dem Nebenkühler angeordnet sind. Der Vorteil dieser Variante besteht darin, daß die Kühlmitteleintrittstemperaturen für Getriebe- und Motorölkühler infolge des Nebenkreises mit Nebenkühler relativ niedrig gehalten werden können.

Nach einer vorteilhaften Weiterbildung der Erfindung gemäß Anspruch 5 kann die mengenmäßige Aufteilung der beiden Teilströme verändert werden, wodurch sich als Vorteil eine optimale Anpassung der Kühlung an die jeweils herrschenden Betriebsbedingungen ergibt.

Nach einer vorteilhaften Weiterbildung der Erfindung ist gemäß Anspruch 6 vorgesehen, daß die Aufteilung der Kühlmittelmenge hinter dem Kühler mittels eines Teilmengenregelventiles erfolgt. Hierdurch wird eine einfache und sichere Aufteilung der beiden Teilströme gewährleistet.

Gemäß Anspruch 7 ist dieses Teilmengenregelventil vorteilhafterweise temperaturabhängig steuerbar. Dies bedeutet eine von außen unabhängige, automatische Steuerung.

Gemäß einer vorteilhaften Alternative nach Anspruch 8 kann das Teilmengenregelventil auch zeitabhängig steuerbar sein, was unter Umständen wirtschaftlicher sein kann.

Eine vorteilhafte Weiterbildung der Erfindung gemäß Anspruch 9 sieht vor, daß anstelle des Teilmengenregelventiles ein Mengenregelventil im Nebenkreis angeordnet ist, das den Durchflußquerschnitt im Nebenkreis bestimmt.

0054792
1.12.1981
80-B-21
EZDP/Heu/hu

Hierdurch ergibt sich eine vereinfachte und billigere Regelung.

In weiterer Ausgestaltung der Erfindung gemäß Anspruch 10 oder 11 kann das Mengenregelventil druckabhängig, d.h. in Abhängigkeit vom Differenzdruck am Mengenregelventil, oder temperaturabhängig steuerbar sein, wodurch sich als Vorteil eine einfache automatische Mengenregelung bzw. eine optimale Anpassung der Ladelufttemperatur an die Betriebsbedingungen ergibt.

Nach einer weiteren Ausgestaltung der Erfindung ist gemäß Anspruch 12 vor dem Hauptkühler ein weiteres Teilmengenregelventil angeordnet, das einerseits mit der Nebenleitung hinter dem Nebenkühler und andererseits mit dem Motorvorlauf verbunden ist. Hierdurch kann die Temperaturregelung in der Weise verfeinert werden, daß zum Beispiel beim Hochfahren der Maschine der Hauptkühler teilweise oder ganz umgangen werden kann; ebenso können Haupt- und Nebenkühler umgangen werden, so daß beim Anfahren Wärme vom Ladeluftkühler aufgenommen und der Maschine zugeführt werden kann.

Gemäß weiteren vorteilhaften Ausbildungen der Erfindung kann das Teilmengenregelventil vor dem Hauptkühler gemäß Anspruch 13 temperaturabhängig und gemäß Anspruch 14 zeitabhängig regelbar sein, wodurch sich je nach Einsatzgebiet technische oder wirtschaftliche Vorteile ergeben.

Ein Ausführungsbeispiel der Erfindung ist in der Zeichnung dargestellt und wird im folgenden näher beschrieben. Es zeigen als Blockschaltbilder

0054792
1.12.1981
80-B-21
EZDP/Heu/hu

Fig. 1        die erfindungsgemäße Kühleinrichtung mit Teilmengenregelventil und Motor- und Getriebeölkühler im Motorvorlauf,

Fig. 2        die erfindungsgemäße Kühleinrichtung mit Teilmengenregelventil und Motor- und Getriebeölkühler im Nebenkreis,

Fig. 3        die erfindungsgemäße Kühleinrichtung gemäß Fig. 1, aber mit Mengenregelventil,

Fig. 4        die erfindungsgemäße Kühleinrichtung gemäß Fig. 2, aber mit Mengenregelventil.

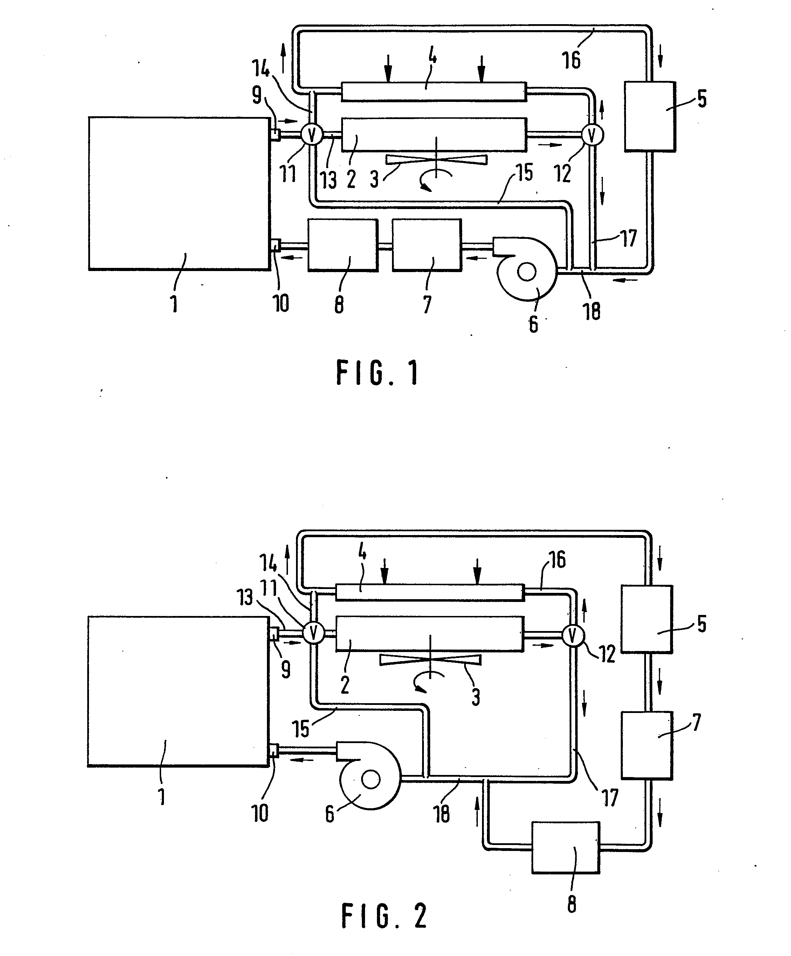

Das Ausführungsbeispiel gemäß Fig. 1 zeigt für die Brennkraftmaschine (1) einen gemeinsamen Kühlmittelkreislauf für die Motor- und Ladeluftkühlung. Die gesamte Kühlmittelmenge verläßt die Brennkraftmaschine beim Kühlmittelaustritt (9) und gelangt über die Motorrücklaufleitung (13) und das darin angeordnete Teilmengenregelventil (11) zunächst in den Hauptkühler (2), der sekundärseitig durch einen durch den Lüfter (3) geförderten Luftstrom beaufschlagt ist. Nach dem Hauptkühler (2) wird die gesamte Kühlmittelmenge im Teilmengenregelventil (12) in zwei Teilströme aufgeteilt, wobei der erste Teilstrom in der Nebenleitung (16) über den Nebenkühler (4) und den Ladeluftkühler (5) geleitet wird. Der zweite Teilstrom wird über die

0054792

1.12.1981
80-B-21
EZDP/Heu/hu

Hauptleitung (17) direkt der Motorvorlaufleitung (18) zugeführt und dort mit dem ersten Teilstrom aus dem Nebenkreis vereinigt. In der Motorvorlaufleitung (18) sind in Strömungsrichtung hintereinander die Pumpe (6), der Getriebeölkühler (7) und der Motorkühler (8) angeordnet. Zur Umgehung des Hauptkühlers (2) und des Nebenkühlers (4) sind eine Bypassleitung (15) und eine Bypassleitung (14) vorgesehen.

Figur 2 zeigt ein weiteres Ausführungsbeispiel der Erfindung, das im wesentlichen identisch mit dem Ausführungsbeispiel gemäß Figur 1 ist, bei dem jedoch der Getriebeöl- und Motorölkühler (7,8) in den Nebenkreis (16) geschaltet sind. In beiden Figuren sind gleiche Teile mit gleichen Bezugszahlen versehen. Der im Nebenkühler (4) abgekühlte Teilstrom durchströmt  also nach Verlassen des Ladeluftkühlers (5) den Getriebeölkühler (7) und anschließend den Motorölkühler (8). Hierdurch kann für die beiden letzten Kühler ein niedrigeres Temperaturniveau eingehalten werden. Der aus dem Motorölkühler (8) austretende Teilstrom vereinigt sich dann in Strömungsrichtung vor der Pumpe (6) wieder mit dem anderen Teilstrom (17) zum Motorvorlauf (18).

Die vorstehend beschriebene erfindungsgemäße Kühleinrichtung arbeitet auf folgende Weise. Beim Warmlaufen der Brennkraftmaschine (1) wird über das temperatur- oder zeitabhängig gesteuerte Teilmengenregelventil (11) zunächst die gesamte Kühlmittelmenge über die Bypassleitung (15) direkt der Saugseite der Pumpe (6) zugeführt und von dieser wieder zur Brennkraftmaschine gefördert. Gleichzeitig bei dieser Aufwärmphase kann ein Teilstrom über die Leitung (14) in den Nebenkreis (16) und somit über den Ladeluftkühler (5) geleitet werden. Hierdurch kann sich eine schnellere Aufwärmung des Kühlmittels ergeben, weil die Ladeluft infolge ihrer höheren Temperatur Wärme an das Kühlmittel abgibt. Nach Erreichen der Betriebstemperatur wird die gesamte Kühlmittelmenge über das Teilmengenregelventil (11) durch den Hauptkühler (2) geleitet, dort abgekühlt und nach Verlassen des Hauptkühlers (2) im Teilmengenregelventil (12) in zwei Teilströme (16 und 17) aufgeteilt. Die mengenmäßige Aufteilung der Teilströme bei Betriebstemperatur der Brennkraftmaschine richtet sich nach den speziellen Anforderungen an diese Kühleinrichtung. Vorzugsweise soll der durch den Nebenkühler (4) geleitete Teilstrom 15 Prozent und der der Pumpe (6) direkt zugeführte Teilstrom 85 Prozent der gesamten umlaufenden Kühlmittelmenge betragen. Durch diese relativ geringe Kühlmittelmenge im Nebenkreis kann im Nebenkühler (4) eine sehr starke Abkühlung auf niedrige Temperaturen erreicht werden. Der Nebenkühler (4) liegt übrigens in Luftströmungsrichtung vor dem Hauptkühler (2), wird also vom gleichen Luftstrom wie der Hauptkühler (2) beaufschlagt. Durch das niedrige Temperaturniveau im Nebenkreis (16) kann die Temperatur der Ladeluft auf dem erwünschten niedrigen Wert gehalten werden, wie er für einen guten Füllungsgrad der Brennkraftmaschine erforderlich ist.

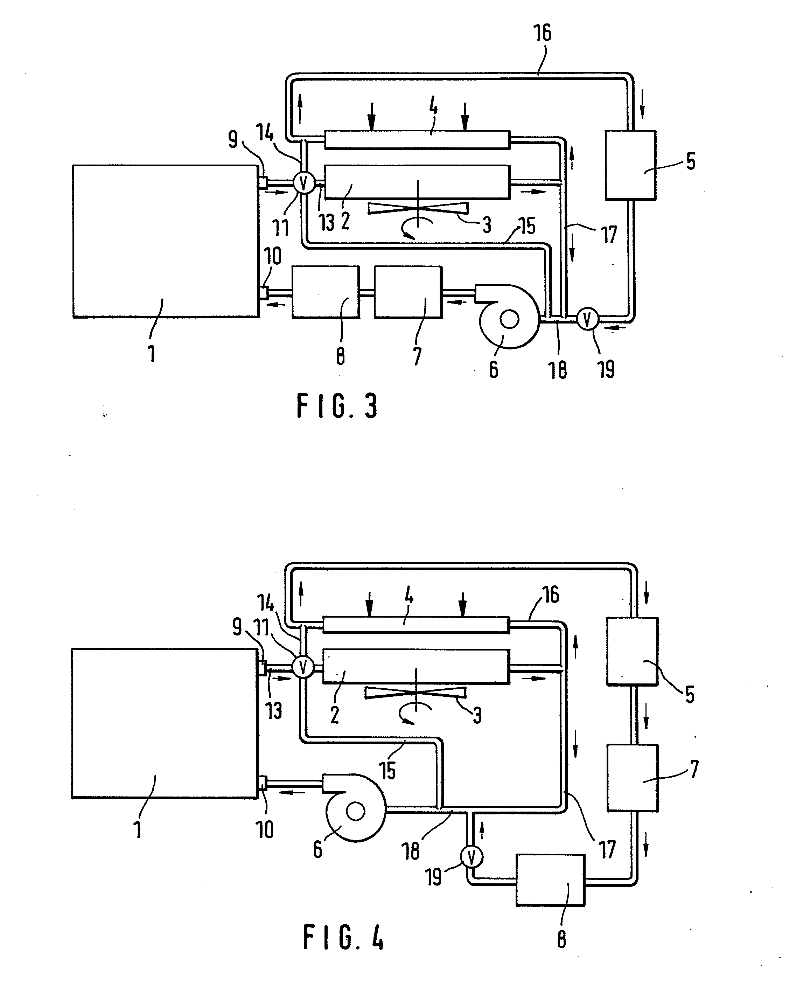

Die Figuren 3 und 4 zeigen die gleichen Anordnungen wie

0054792
1.12.1981
80-B-21
EZDP/Heu/hu

die Figuren 1 und 2, jedoch mit dem Unterschied, daß das Teilmengenregelventil (12) jeweils durch ein einfacheres Mengenregelventil 19 ersetzt wurde, das wie eine variable Blende wirkt. Vorzugsweise kann dieses Mengenregelventil in Abhängigkeit vom Systemdruck des Kühlmittels gesteuert werden. Diese Variante ist insbesondere dann vorteilhaft anwendbar, wenn hinter dem Hauptkühler 2 annähernd konstante Temperatur herrscht, was zum Beispiel bei einem geregelten Lüfterantrieb der Fall ist. In speziellen Fällen kann es jedoch auch vorteilhafter sein, das Mengenregelventil 19 temperaturabhängig zu steuern, nämlich dann, wenn eine optimale Anpassung der Ladelufttemperatur an die Betriebsbedingungen erreicht werden soll.

0054792
1.12.1981
80-B-21
EZDP/Heu/hu

ANSPRÜCHE

1. Kühleinrichtung mit einem gemeinsamen Kühlkreislauf zur Kühlung der Brennkraftmaschine einerseits und der Ladeluft und/oder anderer Medien andererseits, wobei die Kühlung der Brennkraftmaschine im wesentlichen mit einem über einen ersten Kühler geleiteten Kühlmittel auf einem höheren Temperaturniveau und die Kühlung der Ladeluft und/oder anderer Medien mit demselben über einen zweiten Kühler und einen Ladeluftkühler und/oder weitere Wärmetauscher geleiteten Kühlmittel auf einem niedrigeren Temperaturniveau erfolgt und wobei die gesamte umlaufende Kühlmittelmenge durch die Brennkraftmaschine geleitet wird, d a d u r c h   g e k e n n z e i c h - n e t ,   daß die gesamte aus der Brennkraftmaschine (1) austretende Kühlmittelmenge bei Betriebstemperatur der Brennkraftmaschine (1) zunächst über den als Hauptkühler (2) ausgelegten ersten Kühler geleitet und danach in zwei Teilströme (16,17) aufgeteilt ist, von denen der erste Teilstrom (17) zur Brennkraftmaschine (1) zurückgeführt und der zweite Teilstrom (16) über den als Nebenkühler (4) ausgelegten zweiten Kühler und einen Ladeluftkühler (5) geleitet und vor der Brennkraftmaschine (1) wieder mit dem ersten Teilstrom (17) vereinigt ist.

2. Kühleinrichtung nach Anspruch 1, d a d u r c h   g e k e n n z e i c h n e t ,   daß in Strömungsrichtung hinter der Vereinigung der beiden Teilströme (16, 17) und vor dem Kühlmitteleintritt (10) der Brennkraftmaschine (1) eine Pumpe (6) zur Förderung der gesamten

0054792
1.12.1981
80-B-21
EZDP/Heu/hu

umlaufenden Kühlmittelmenge angeordnet ist.

3.    Kühleinrichtung nach Anspruch 1 oder 2, d a - d u r c h   g e k e n n z e i c h n e t ,   daß zwischen Pumpe (6) und Kühlmitteleintritt (10) der Brennkraftmaschine (1) ein Getriebeölkühler (7) und/ oder ein Motorölkühler (8) angeordnet sind.

4.    Kühleinrichtung nach Anspruch 1 oder 2, d a - d u r c h   g e k e n n z e i c h n e t ,   daß in Strömungsrichtung hinter dem Nebenkühler (4)·und vor der Vereinigung der beiden Teilströme (16,17) in beliebiger Reihenfolge Wärmetauscher wie ein Ladeluftkühler (5), ein Getriebeölkühler (7) und ein Motorölkühler (8) angeordnet sind.

5.    Kühleinrichtung nach Anspruch 1 oder 2 oder 3 oder 4, d a d u r c h   g e k e n n z e i c h n e t , daß die mengenmäßige Aufteilung der gesamten aus dem Hauptkühler (2) austretenden Kühlmittelmenge in zwei Teilströme (16,17) verstellbar ist.

6.    Kühleinrichtung nach Anspruch 5, d a d u r c h g e k e n n z e i c h n e t ,   daß zur Aufteilung der gesamten Kühlmittelmenge hinter dem Hauptkühler (2) an der Verzweigungsstelle von Neben- und Hauptleitung (16,17) ein Teilmengenregelventil (12) angeordnet ist.

7.    Kühleinrichtung nach Anspruch 6, d a d u r c h g e k e n n z e i c h n e t ,   daß das Teilmengen- regelventil (12) temperaturabhängig steuerbar ist.

8. Kühleinrichtung nach Anspruch 6, d a d u r c h
g e k e n n z e i c h n e t , daß das Teilmengenregelventil (12) zeitabhängig steuerbar ist.

9. Kühleinrichtung nach Anspruch 5, d a d u r c h
g e k e n n z e i c h n e t , daß in der Nebenleitung
(16) vor deren Vereinigung mit der Hauptleitung (17) ein
Mengenregelventil (19) angeordnet ist.

10. Kühleinrichtung nach Anspruch 9, d a d u r c h
g e k e n n z e i c h n e t , daß das Mengenregelventil
(19) druckabhängig steuerbar ist.

11. Kühleinrichtung nach Anspruch 9, d a d u r c h
g e k e n n z e i c h n e t , daß das Mengenregelventil
(19) temperaturabhängig steuerbar ist.

12. Kühleinrichtung nach Anspruch 1, 2, 3, 4, 5, 6, 7,
8, 9, 10 oder 11, d a d u r c h g e k e n n z e i c h-
n e t , daß vor dem Hauptkühler (2) ein Teilmengenregelventil (11) angeordnet ist, das mit der Nebenleitung
(16) hinter dem Nebenkühler (4) und mit dem Vorlauf (18)
der Brennkraftmaschine (1) verbunden ist und die gesamte
Kühlmittelmenge in Teilströme (14,15) zur Umgehung des
Haupt- und Nebenkühlers (2, 4) aufteilt oder direkt dem
Vorlauf (18) zuführt.

13. Kühleinrichtung nach Anspruch 12, d a d u r c h
g e k e n n z e i c h n e t , daß das Teilmengenregelventil (11) vor dem Hauptkühler (2) temperaturabhängig
steuerbar ist.

14.   Kühleinrichtung nach Anspruch 12, d a d u r c h
g e k e n n z e i c h n e t , daß das Teilmengenregelventil (11) vor dem Hauptkühler (2) zeitabhängig steuerbar ist.

FIG. 1

FIG. 2

FIG. 3

FIG. 4